# EUROPEAN PATENT APPLICATION

(11) **EP 0 534 922 A2**
(43) Date of publication of application: **31.03.1993**
(21) Application number: 92850222.8
(22) Date of filing: 18.09.1992
(51) Int. Cl.: E21F 13/02, B65G 67/06

(54) **A transportation system for continuous tunnel construction work**

(30) Priority: 24.09.1991 SE 9102761
(71) Applicant: SVENSKA KRAFTBYGGARNA ENTREPRENAD AB, S-951 28 Lulea (SE)
(72) Inventor: Manström, Hilding, S-951 61 Lulea (SE)
(74) Representative: Onn, Thorsten

(57) **Abstract**

A transportation system for continuous tunnel-driving operations, comprises a drill assembly, a rail-bound back-rig which in addition to standard conventional units also includes a load transfer station which comprises a plurality of portal units, and a track-bound pulling or towing unit having trucks for transporting rock debris, wherein each portal unit is comprised of an essentially parallelepipedic frame construction on whose transverse bottom beams there is arranged tracks and a centre rail for the pulling unit with the carriages, and at whose upper part above carriage height there is arranged an arrangement for receiving, storing and emptying the rock debris which is transferred from the drill assembly to the arrangement via transporters. The system is characterized in that the arrangement for receiving, storing and emptying the rock debris is comprised partly of a drum (E) which is mounted for rotation on the end-wall beams of the frame construction (1) at its upper part and presents a longitudinally extending opening (6) which in a drum filling position and storage position faces upwards and in a drum-emptying position faces downwards, and also partly of a stationary load box (7) having a longitudinally extending bottom opening (8) and guide plates (9) for emptying the rock debris, the stationary load box being attached to the frame construction (1) and the drum (E) being partially located in the box.

## Description

The present invention relates to a transportation system for continuous tunnel construction work, or tunnel driving, comprising a drill assembly, a rail-bound back-rig which, in addition to standard conventional units, also includes a transfer station consisting of one or more portal units, and a rail-bound pulling unit which includes trucks for the transportation of rock debris, wherein each portal unit is comprised of a generally parallelepipedic frame construction, each of which has provided on its transverse bottom beams tracks and a central rail for the pulling or towing unit and said trucks and the upper part of each said frame construction above truck height is provided with means for receiving, storing and emptying the rock debris that is transferred thereto from the drill assembly with the aid of transporters.

Previously known transportation systems for tunnel construction work have comprised at least two trains with trucks and duplicated tracks adjacent the location of the tunnel construction on each side of a belt conveyor used to transport the rock debris. The rock is loaded onto the transporter with the aid of inclined chutes located on both sides of the transporter.

Loading is effected in the following manner: When a train has been loaded and the other train is waiting on the side track, the first train is moved away. The transporter, which has been stopped when loading of the first train is completed, is now restarted and loads the second train, whereafter the transporter is again stopped and waits for the first train, and so on.

Naturally, when the transporter is stopped no intermediate storage will take place and the drill assembly is also stopped. This known transportation system thus results in discontinuous or intermittent tunnel construction, causing considerable time losses and consequently results in much longer tunnel construction times and therewith much higher costs than would be incurred by continuous construction work in the absence of interruptions, such as when using the inventive transportation system. Naturally, other economic drawbacks with these known intermittently operating transportation systems is that they require at least two trains with trucks and also the provision of twin tracks at the construction site.

The object of the present invention is to provide a transportation system which will enable a tunnel to be constructed, or driven, continuously without incurring the aforesaid time losses and while eliminating other drawbacks, such as the requirement of two trains and twin tracks at the tunnel construction site.

This object is achieved with the inventive transportation system for continuous tunnel construction work, which is characterized in that the means for receiving, storing and emptying the rock debris, i.e. loosened rock, is comprised partly of a drum which is mounted for rotation on the end-wall beams of the frame construction at their upper parts and which presents an elongated opening which faces upwards when the drum is in its filling and storing position and which faces downwards when the drum is in its emptying position, and partly of a stationary load box which has a longitudinally extending bottom opening and rock discharging guide plates which are fixed to the frame construction and within which part of the drum is located.

The inventive drum is preferably characterized in that the drum is provided at one end-wall side around its periphery with pins which extend at right angles to said end-wall side; in that a hydraulic piston-cylinder device is mounted on the end-wall side of the box corresponding to the end-wall side of the drum parallel with the latter and in that an arm which prevents back rotation is mounted above the hydraulic piston-cylinder device, wherein the hydraulic piston-cylinder device and the arm are pivotally mounted to the load box at their cylinder end and one end respectively, whereas the piston-rod end of the piston-cylinder device and the other end of said arm have a claw-like configuration with a long upper finger and a short lower finger which are in sliding engagement with a respective pin; in that the hydraulic piston-cylinder device is intended to rotate the drum stepwise in a clockwise direction in coaction with the pins, said pins moving along, towards and past the ends of the fingers and which therewith fall gravitational onto respective following pins until the drum has been rotated through 360°; and in that mounted on the end-wall side of the box opposite to the end-wall side of the drum provided with the pins is a further hydraulic piston-cylinder device which has a pivotal locking flap and which together with a shoulder on the periphery of the drum is intended to latch the drum against clockwise rotation in the drum loading position.

The inventive system is also characterized in that the load box and the trucks are so dimensioned in relation to one another that the horizontal lower edge of respective guide plates and an imaginary line from the inner end of the horizontal, lower edges of respective guide plates to the upper end of the vertical, longitudinally extending side-walls of the trucks together form an angle which is smaller than the angle of repose of the rock debris.

The inventive system is also characterized in that covering flaps or plates are provided between the drums, these flaps having a U-shape transversely to the longitudinal axis of the drum with upwardly convex bottoms; and in that the drum loading transporter is provided on its underside with a scraper which has the form of an inverse U extending transversely to the longitudinal axis of the transporter.

As a result of the structural design of the inventive transportation system, particularly its drums and load box, and because the drums enable intermediate storage of the rock debris, it is possible to carry away the rock debris without needing to stop either the transporters or the drill assembly and with the aid of one single train and one single track, and therewith construct or drive rock tunnels continuously.

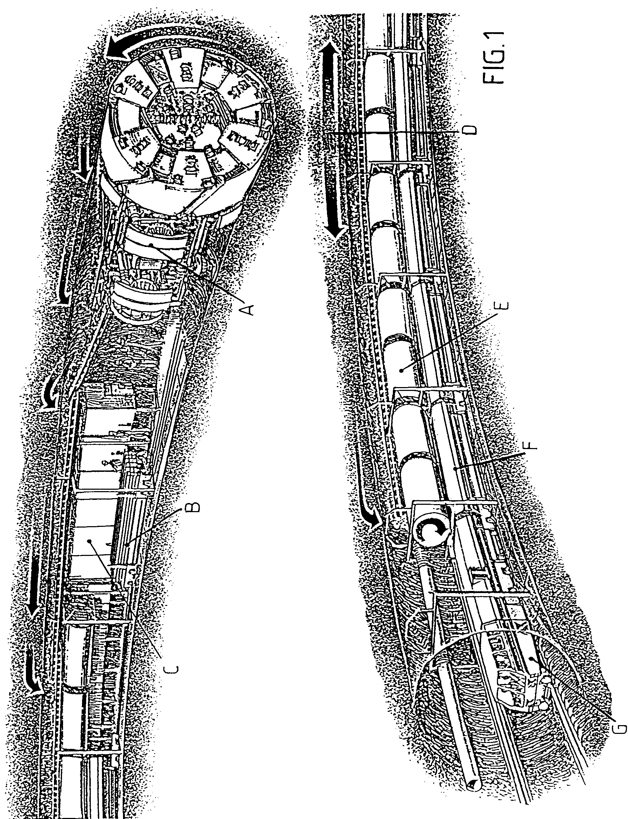

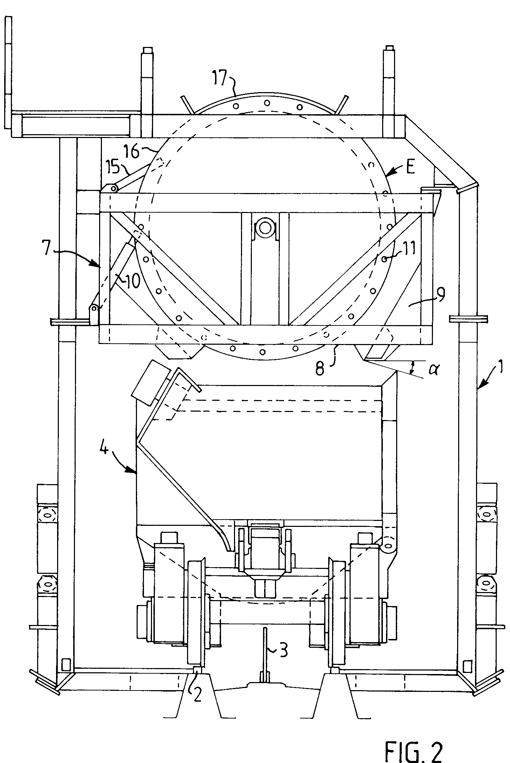

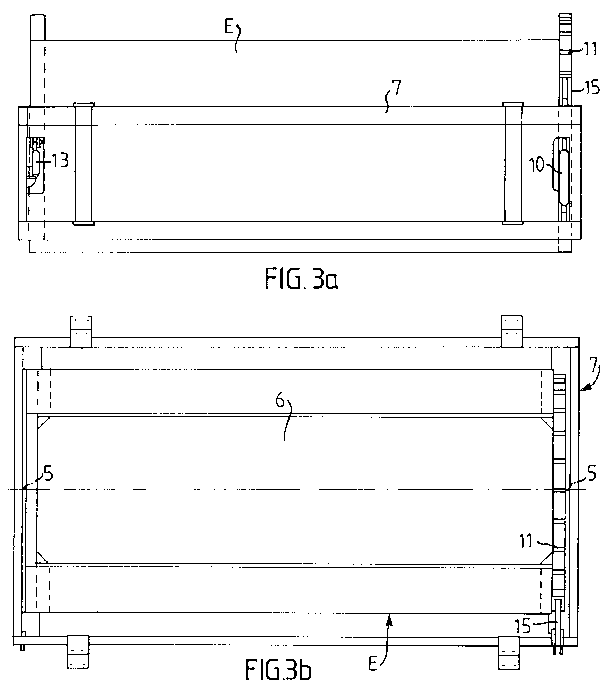

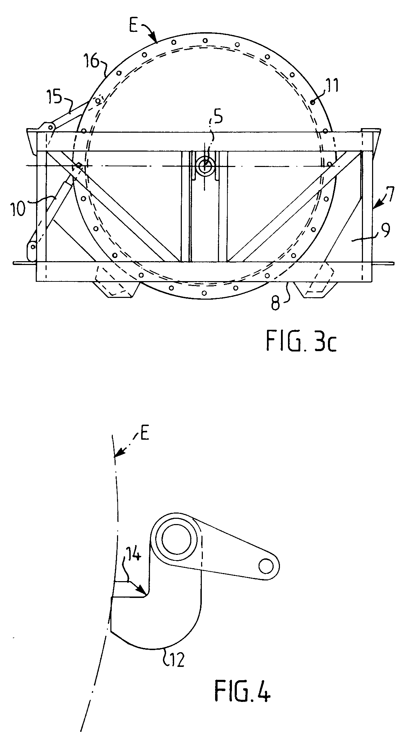

The invention will now be described in more detail with reference to the accompanying drawings, in which Figure 1 is a schematic perspective view in two parts of one embodiment of the inventive transportation system for driving or construction tunnels continuously in accordance with the present invention; Figure 2 is a front view of a portal unit into which a truck has reversed, the Figure also illustrating a top mounted drum and a load box according to the invention; Figures 3a, b and c are, in that order, a side view, top view and front view of the drum and the load box illustrated in Figure 2 and also illustrate respective devices for rotating and for locking the drum against rotation in an anti-clockwise and a clockwise direction in the load position; and Figure 4 is a front view in larger scale of the device shown in Figure 3a for locking the drum against clockwise rotation in the load position.

As illustrated in Figure 1, the inventive transportation system for continuous tunnel driving processes comprises a drill assembly A, a rail-cassette service carriage B, a service equipment plant C, such as an operations cabin, personnel quarters, air-conditioning, transformers, cables, control system, water and compressed-air sources, a shuttle transporter D for loading the drums E of the load transfer station, self-tipping trucks F and a locomotive G, as seen from the front of the tunnel and rearwards. The units B, C, D and E are included in the so-called back-rig, which is not shown in Figure 1, where the plant C is shown placed separately on the side of the back-rig. The plant C is therewith placed behind the service carriage B. Located between the drill assembly A and the back-rig, which rolls on wheels on the track on the bottom of the tunnel, is a coupling frame having transverse beams for laying the rail cassettes although this is not shown in Figure 1. The Figure 1 illustration does show, however, two stationary transporters in addition to the shuttle transporter, these stationary transporters functioning to load the rock debris, or loosened rock, into the drums E, alternatively from left to right. The drums are therewith stationary. In an alternative embodiment, the transporter may have an unloading end fixed to mobile drums. The advantage gained with this alternative is that the total height of the arrangement as a whole will decrease with the height of the shuttle conveyor.

As shown in Figure 2, each portal unit is comprised of an essentially parallelepipedic frame construction 1 on whose transverse bottom beams tracks 2 and a centre rail 3 are arranged for a friction-drive pulling unit having trucks 4 and which carries at its upper part two drums E for receiving, storing and emptying the rock debris from the shuttle transporter which is pivotally journalled to the end-wall beams of the frame construction and which is provided with a longitudinally extending opening 6 which faces upwards in the drum-filling position and downwards in the drum-emptying position. A stationary load box 7 is attached to the frame construction of each drum E and has a longitudinally extending bottom opening 8 and guide plates 9 which function to guide the rock debris from the drum A into the truck 4. The two drums E in each portal unit have a volumetric capacity corresponding to the volumetric capacity of a truck 4 and the number of drums E provided is normally greater than the number of trucks. This enables the drums to be filled continuously from the shuttle transporter even when emptying the drum contents into the trucks. Furthermore, each drum E can be emptied independently of the others and the drums are emptied by rotating the drums stepwise in a clockwise direction by means of a hydraulic piston-cylinder device 10 which coacts with so-called stepping pins 11 provided on one end-wall side of the drum, wherein the drum is rotated continuously from the load position back to the load position via the emptying position. As will be understood, the speed at which the drum E is rotated may vary during the process of emptying the drum.

Prior to emptying a drum, i.e. before commencing rotation of the drum E, a pivotal locking flap 12 is released from its engagement with a shoulder 14 on the drum periphery by means of a further hydraulic piston-cylinder device 13, so as to enable the drum to be rotated clockwise. The flap 12, the hydraulic cylinder 13 and the shoulder 14 are mounted on the end-wall side of the drum that lacks pins 11. In addition to the hydraulic piston-cylinder device 10 through which the drum is rotated, the end-wall side of the drum E carrying the pins also carries a latching arm 15 which prevents the drum from rotating in an anti-clockwise direction. The latching arm slides in a U-shaped part 16 along the pin-carrying wall of the drum and falls down on a subsequent pin 11 at the end of each rotational step of the piston-cylinder device 10.

In order to prevent rock debris from falling down between the drums when transferring rock debris from the shuttle transporter to the drums E, cover plates 17 are mounted between the drums E in a manner such that debris which falls onto the cover plates will be pushed from the plates and down into the next drum E by means of a scarper which, when seen transversely to the longitudinal axis of the shuttle transporter, has the form of an inverse U and is mounted beneath the shuttle transporter.

In order to prevent rock debris falling from the load box 7 when emptying the drums E into the trucks 4 via said load box, guide plates 9 are provided which conform to the profile of the truck 4, so that the angle α between the upper end of the vertical side walls of the truck and the lower edges of the guide plates will be smaller than the angle of repose of the rock debris. This prevents spillage when the truck is overfilled and all overspill debris will accompany the drums E back to the loading station.

## Claims

1. A transportation system for continuous tunnel-driving operations, comprises a drill assembly, a rail-bound back-rig which in addition to standard conventional units also includes a load transfer station which comprises a plurality of portal units, and a track-bound pulling or towing unit having trucks for transporting rock debris, wherein each portal unit is comprised of an essentially parallelepipedic frame construction on whose transverse bottom beams there is arranged tracks and a centre rail for the pulling unit with the carriages, and at whose upper part above carriage height there is arranged an arrangement for receiving, storing and emptying the rock debris which is transferred from the drill assembly to said arrangement via transporters, **characterized** in that the arrangement for receiving, storing and emptying the rock debris is comprised partly of a drum (E) which is mounted for rotation on the end-wall beams of the frame construction (1) at its upper part and presents a longitudinally extending opening (6) which in a drum filling position and storage position faces upwards and in a drum-emptying position faces downwards, and also partly of a stationary load box (7) having a longitudinally extending bottom opening (8) and guide plates (9) for emptying the rock debris, said stationary load box being attached to the frame construction (1) and the drum (E) being partially located in said box.

2. A system according to Claim 1, **characterized** in that the drum (E) is provided at its one end-wall side around its periphery with pins (11) which extend at right angles to said one end-wall side; in that a hydraulic piston-cylinder device (10) is mounted on the end-wall side of the load box (7) that corresponds to said drum end-wall side, parallel with the latter and wherein a non-return arm (15) is mounted above the hydraulic piston-cylinder device; in that the hydraulic piston-cylinder device and the arm are pivotally mounted to the load box (7) at respective ends thereof, while the piston-rod end of the piston-cylinder device and the other end of the arm have a claw-like configuration with a long upper finger and a short lower finger which slidingly engage the pins (11); in that the piston-cylinder device (10) is intended to rotate the drum (E) stepwise in a clockwise direction in coaction with the pins (11), wherein the pins (11) move along, against and past the ends of the fingers which thereupon fall gravitationally onto respective subsequent pins (11) until the drum has been rotated through 360°; and in that there is mounted on the end-wall side of the load box (7) opposite the pin-carrying end-wall side of the drum (E) a further hydraulic piston-cylinder device (13) having a pivotal locking flap (12) which in coaction with a stop (14) on the drum periphery is intended to latch the drum against clockwise rotation in the drum loading position.

3. A system according to Claim 1 or 2, **characterized** in that the horizontal bottom edge of the guide plates (9) and an imaginary line which extends from the inner end of the horizontal bottom edge of the guide plates (9) to the upper end of the vertical, longitudinally extending side walls of the trucks (4) together form an angle (α) which is smaller than the angle of repose of the rock debris.

4. A system according to any one of Claims 1-3, **characterized** by cover plates (17) which are arranged between the drums (3) and which have a U-shape transversely to the longitudinal axis of the drum with an upwardly convex bottom; and in that the drum loading transporter is provided on its underside with a scraper which extends transversely to the longitudinal axis of the transporter and which has the shape of an inverse U.
